## Europäisches Patentamt

## European Patent Office

## Office européen des brevets

(11) Veröffentlichungsnummer: **0 161 570**
**A2**

(12) # EUROPÄISCHE PATENTANMELDUNG

(21) Anmeldenummer: **85105190.4**

(51) Int. Cl.⁴: **F 16 L 55/12**

(22) Anmeldetag: **29.04.85**

(30) Priorität: **05.05.84 DE 8413877 U**

(71) Anmelder: **Vetter, Manfred, Burg Langendorf, D-5352 Zülpich (DE)**

(43) Veröffentlichungstag der Anmeldung: **21.11.85** Patentblatt **85/47**

(72) Erfinder: **Vetter, Manfred, Burg Langendorf, D-5352 Zülpich (DE)**

(74) Vertreter: **Bauer, Wulf, Dr., Wolfgang-Müller-Strasse 12, D-5000 Köln 51 (Marienburg) (DE)**

(84) Benannte Vertragsstaaten: **AT DE FR GB IT NL SE**

(54) **Dichtvorrichtung für ein Rohr mit einem zylindrischen, an eine Innenwand des Rohres flächig anlegbaren Mantel und einer Endwand.**

(57) Die Dichtvorrichtung für ein Rohr (22) ist zumindest becherförmig aufgebaut und besteht dabei aus einem an die Innenwand (28) des abzudichtenden Rohres (22) flächig anlegbaren Mantel (14), der sich nach vorn in eine Dichtlippe (24) fortsetzt und aus einer Endwand (18). Die Dichtlippe (24) hat ein freies Ende (26) und kann über eine ihr zugeordnete Spreizvorrichtung (19) einschließlich ihres freien Endes (26) an die Innenwand (28) des Rohres (22) angepreßt werden. In bevorzugter Weiterbildung hat die Dichtvorrichtung einen hydraulisch oder pneumatisch füllbaren Innenraum (12).

**DR. RER. NAT. WULF BAUER**
**PATENTANWALT**

0161570

WOLFGANG-MÜLLER-STHASSE 12
D-5000 KÖLN 51 (MARIENBURG)
V2 84/2 EPA

Anmelder:    Herr Manfred VETTER in 5352 Zülpich

Bezeichnung: Dichtvorrichtung für ein Rohr mit einem
zylindrischen, an eine Innenwand des Rohres
flächig anlegbaren Mantel und einer Endwand.

---

Die Erfindung bezieht sich auf eine Dichtvorrichtung für ein Rohr mit einem zylindrischen, an eine Innenwand des Rohres flächig anlegbaren Mantel aus nachgiebigem, flüssigkeits- und gasdichten Material, der einen druckzugewandten Endbereich und einen druckabgewandten Endbereich aufweist und mit einer kreisförmigen Endwand aus flüssigkeits- und gasdichtem Material, die den Mantel am druckabgewandten Endbereich dicht abschließt.

Die aus der US-PS 3,459,230 bekannte Dichtvorrichtung für ein Rohr der eingangs genannten Art ist als Rohrdichtkissen ausgeführt, das neben der genannten Endwand noch eine weitere Endwand hat, wodurch ein zylinderförmiger Innenraum erreicht wird. Füllt man diesen mit einem Gas oder einer Flüssigkeit unter Druck, so wird der zylinderförmige Mantel insbesondere in seinem Mittelbereich radial ausgebeult, der Mantel nimmt etwa eine Tonnenform an. Der Durchmesser der stirnseitigen Endwände bleibt beim Füllen konstant. Der Außendurchmesser im Bereich der beiden stirnseitigen Endwände muß etwas kleiner sein als der Innendurchmesser des abzudichtenden Rohres, um die im entspannten Zustand im wesentlichen zylindrische Dichtvorrichtung in das Rohr einführen zu können. Dies hat zwangsläufig zur Folge, daß das Rohrdichtkissen nur auf einem Teil der Gesamtlänge seines Mantels an der Innenwand des Rohres anliegt. Im Bereich der Endwände bleibt daher stets ein Spalt zwischen Endwand und Innenwand des abzudichtenden Rohres frei. Dieser Spalt verjüngt sich ausgehend von der Endwand keilförmig in Richtung zur anderen Endwand hin. Die effektive Länge, über die das Rohrdichtkissen tatsächlich mit seinem Mantel an der Innenwand des abzudichtenden Rohres anliegt, ist daher gegeben durch die geometrische Axiallänge des Mantels abzüglich der Länge der beiden keilförmigen Spalte an den Endwänden.

Nun liegt aber ein unter Druck gefülltes, beispielsweise mit Luft von 1,5 bar gefülltes Rohrdichtkissen zwischen diesen beiden keilförmigen Spalten nicht an allen Stellen mit seinem Fülldruck an der Innenwand des abzudichtenden Rohres an. An der Stelle, an der die Spalte zu Null auslaufen und der Außenmantel die Innenwand des abzudichtenden Rohres berührt, ist der Anpreßdruck praktisch Null. Der Anpreßdruck steigt ausgehend von dieser Stelle kontinuierlich zur Mitte des Rohrdichtkissens hin an und hat zumindest in der Mitte des Rohrdichtkissens, im allgemeinen aber auf einem gewissen Teil der Axiallänge des Rohrdichtkissens, den Wert des Fülldrucks. Das im Beispiel mit 1,5 bar gefüllte Kissen liegt also nur über einen Teil seiner effektiven Anlagelänge, die ohnehin kürzer als seine geometrische Länge ist, mit einem Druck von 1,5 bar an der Innenwand des abzudichtenden Rohres an.

Die Normalkraft, mit der ein gefülltes Rohrdichtkissen an der Innenwand eines abzudichtenden Rohres anliegt, ist daher im wesentlichen bestimmt durch das Produkt aus seinem Fülldruck und einem Teilbereich der Fläche seines Außenmantels. Dabei ist es nachteilig, daß nicht die gesamte Fläche des Außenmantels wirkt, weiterhin ist es nachteilig, daß die Normalkraft unabhängig von der wirkenden Gegenkraft, also vom Druck einer abzusperrenden Flüssigkeit oder eines Gases ist.

Im praktischen Einsatzfall befindet sich auf einer Seite des Rohrdichtkissens eine unter Druck stehende Flüssigkeit oder ein unter Druck stehendes Gas. Ist der Druck des abzusperrenden Mediums größer als der Atmosphärendruck, so nimmt auf der Belastungsseite des Kissens der dort an der Außenwand vorhandene Spalt eine größere Länge an, anders ausgedrückt verschiebt sich die Stelle, an der der Außenmantel drucklos an der Innenwand des abzudichtenden Rohres anliegt, zum Zentrum des Abdichtkissens hin. Diese Verlängerung des endseitigen Spaltes und die Spaltwirkung beeinträchtigen die Funktion des Rohrdichtkissens in verhängnisvoller Weise: Je höher der Gegendruck, der abzusperren ist, wird, um so länger ist der sich an der Abdichtseite ausbildende Spalt, um so kürzer die tatsächliche, effektive Anlagelänge. Damit aber verringert sich mit steigendem Gegendruck die Normalkraft, mit der das Rohrdichtkissen sich gegen die Innenwand des abzudichtenden Rohres preßt. Wünschenswert wäre eine entgegengesetzte Abhängigkeit, also eine mit dem Gegendruck wachsende Normalkraft. Dies ist bei dem bekannten Rohrdichtkissen jedoch nicht gegeben. Wie bereits oben ausgeführt wurde, ist der die Normalkraft mitbestimmende Innendruck im Rohrdichtkissen ein vorgegebener Wert und unabhängig vom Gegendruck und derjenige Teil der Gesamtfläche des Außenmantels, der mit dem Fülldruck, also dem Innendruck, an der Innenwand des abzudichtenden Rohres anliegt, wird mit wachsendem Gegendruck kleiner.

Als Fazit ergibt sich, daß ein Kissen der oben beschriebenen, herkömmlichen Bauart Gegendrucken nicht widerstehen kann, die gleich oder größer sind als sein Fülldruck. Wenn der Gegendruck denselben Wert hat wie der Fülldruck im Rohrdichtkissen, hat das Rohrdichtkissen dieselbe Form wie im nicht aufgeblasenen Zustand, also Zylinderform. In diesem Fall hat sich der oben beschriebene Spalt auf der Druckseite über die gesamte Länge des Rohrdichtkissens hin ausgebildet und mit dem Spalt an der anderen, drucklosen Seite vereinigt.

Da das Rohrdichtkissen somit auf jeden Fall seine Dichtfunktion verliert, wenn der Gegendruck dem Innendruck gleich ist, ist davon auszugehen, daß das Rohrdichtkissen bereits bei niedrigeren Gegendrucken, als dem Wert seines Innendrucks entspricht, im Rohr zu rutschen beginnt.

Bei der obigen Betrachtung konnte die Haftreibung zwischen dem Außenmantel und der Innenwand des abzudichtenden Rohres zunächst außer acht gelassen werden. Eine grob überschlägliche Berechnung der Haftreibung zeigt nun aber, daß das Rohrdichtkissen durchaus einem Gegendruck standhalten kann, der dem Mehrfachen seines Innendrucks entspricht, wenn verhindert wird, daß sich der Gegendruck auf die Mantelfläche des Rohrdichtkissens auswirkt und die dort zwangsläufig bestehenden Spalte vergrößert, wenn also erreicht wird, daß der Gegendruck nicht den Druck, mit dem das Kissen an der Innenwand des abzudichtenden Rohres anliegt, vermindert.

Hier setzt nun die Erfindung ein. Sie hat es sich zur Aufgabe gestellt, die Nachteile der bekannten Dichtvorrichtung für Rohre zu vermeiden und eine Dichtvorrichtung zu schaffen, die wesentlich höheren Gegendrucken als die vorbekannte Dichtvorrichtung widerstehen kann, ohne im Rohr durch das abzusperrende Medium verschoben zu werden, wobei insbesondere der Druck des im Rohr abzusperrenden Mediums zur Unterstützung des Anpreßdrucks der Dichtvorrichtung eingesetzt werden soll.

Diese Aufgabe wird ausgehend von der bekannten Dichtvorrichtung der eingangs genannten Art dadurch gelöst, daß am druckzugewandten Endbereich des Mantels eine umlaufende Dichtlippe aus einem flexiblen, flüssigkeits- und gasdichten Material ausgebildet ist, die ein freies Ende aufweist und daß eine rückstellbare Spreizvorrichtung zur Anpressung der Dichtlippe einschließlich ihres freien Endes auf einer geschlossenen Ringfläche und an die Innenwand des Rohres der Dichtlippe zugeordnet ist.

Der Grundgedanke ist damit folgender: Der eigentliche Dichtbereich der Dichtvorrichtung wird an das druckzugewandte Ende der Dichtvorrichtung verlagert, zugleich wird dieser Endbereich becherförmig ausgebildet. Auf Grund dieser Becherform wirkt der Druck des abzusperrenden Mediums auf die Innenwand der Dichtlippe und - soweit vorgesehen - auf die Innenwand des Mantels und bewirkt dort einen Anpreßdruck, der mit steigendem Druck des abzusperrenden Mediums größer wird.

Bevor sich das abzusperrende Medium im Rohr befindet (Anwendungsfall einer zu testenden Wasser- oder Gasleitung, insbesondere für die Hausinstallation), oder bevor das abzusperrende Medium einen Gegendruck an der Dichtvorrichtung aufbauen konnte (Fall der Ansperrung einer Abwasserleitung oder dergleichen) wird die Dichtlippe durch die Spreizvorrichtung mit einer gewissen Anpreßkraft an die Innenwand des abzudichtenden Rohres angelegt. Diese Anpreßkraft wird nun nach Anlegen des Gegendrucks (durch das abzusperrende Medium) nicht aufgehoben, sondern noch verstärkt. Im Bereich der Dichtlippe wird also zunächst eine Abdichtung erzielt, die Dichtlippe wird mit steigendem Gegendruck stärker an die Innenwand des abzudichtenden Rohres gepreßt und es wird ein zusätzlicher Beitrag zur Normalkraft erhalten. Dabei ist sehr vorteilhaft, daß dieser zusätzliche Beitrag mit wachsendem Gegendruck ansteigt.

In bevorzugter Ausbildung der Erfindung befindet sich zwischen der Dichtlippe und dem druckabgewandten Endbereich eine flüssigkeits- und gasdichte, kreisförmige Zwischenwand, die zusammen mit dem Mantel und der Endwand einen dichten, aufblasbaren Innenraum ausbildet, der über ein Anschlußstück, das sich vorzugsweise in der Endwand befindet, zugänglich ist.

Bei dieser Weiterbildung des aufblasbaren Rohrdichtkissens der eingangs genannten Art wird der eigentliche Dichtbereich des Kissens vor die druckzugewandte Abschlußwand des zylindrischen Kissens verlegt. Hierdurch wird eine Bildung von umlaufenden, ringförmigen Spalten verhindert. Es ist nicht mehr ausschließlich der Fülldruck, der bestimmt, bei welchem Gegendruck das Kissen im Rohr zu rutschen beginnt, insbesondere ist die Anpreßkraft des Mantels nunmehr unabhängig vom Druck des abzusperrenden Mediums, da die Dichtlippe verhindert, daß sich mit steigendem Druck des abzusperrenden Mediums der keilförmige Spalt am druckzugewandten Endbereich zunehmend ausdehnt und dadurch die Anlagefläche des Mantels verringert.

Der aufblasbare oder mit Flüssigkeit füllbare Bereich der erfindungsgemäßen Dichtvorrichtung dient somit nicht der eigentlichen Abdichtung, sondern verstärkt die Anpreßkraft der Dichtungsvorrichtung an die Innenwand des Rohres. Daneben ermöglicht er eine Fixierung der Dichtvorrichtung an beliebiger Stelle entlang der Innenwand des Rohres, wodurch es möglich wird, die Dichtlippe erst nach erreichter Fixierung der Dichtvorrichtung an die Innenwand anzulegen. Schließlich kann in vorteilhafter Weiterbildung die beim Aufblasen des füllbaren Bereichs zwangsläufig erzielte Formänderung dieses Bereichs dazu genutzt werden, die Dichtlippe mechanisch an die Innenwand des abzusperrenden Rohres zu pressen.

In einer bevorzugten Ausbildung der Erfindung liegt die Lippe bei betätigter Spreizvorrichtung elastisch an der Innenwand des abzudichtenden Rohres an. Diese radial nach außen wirkende Kraft wird durch eine Vorspannung, die der Dichtlippe beispielsweise über eine Feder verliehen wird, oder durch die Spreizvorrichtung aufgebracht. Erreicht wird hierdurch, daß die Lippe durch den Gegendruck des abzusperrenden Mediums nicht von der Wand des abzudichtenden Rohres entfernt oder weggedrückt werden kann. Die beschriebene Vorspannung bzw. der bewirkte Anpreßdruck wird durch den Gegendruck des abzusperrenden Mediums nicht gemindert. Würde die Lippe auch nur auf einem geringen Teil ihres Umfangs auf ihrer druckzugewandten Seite nicht mehr an der Innenwand des abzudichtenden Rohres anliegen, so würde das unter Druck befindliche Medium zwischen die Dichtlippe und die Innenwand strömen und diese unwirksam machen, da der bereits oben beschriebene Keileffekt zwangsläufig auftritt.

Vorteilhafterweise befindet sich die Lippe im arretierten, nicht betätigten Zustand der Spreizvorrichtung, insbesondere bei nicht gefülltem aufblasbaren Bereich, radial eingezogen und innerhalb eines Zylinders, dessen Radius nicht größer ist als der Radius der Endwand. Hierdurch ist gewährleistet, daß die Dichtvorrichtung in ein abzusperrendes Rohr eingeschoben werden kann, ohne daß die Lippe hierbei eine zusätzliche Reibung verursacht und damit das Einschieben erschwert und ohne daß die Lippe beim Einschieben beschädigt werden kann. In angezogenen Zustand der Spreizvorrichtung, insbesondere nach Füllen des aufblasbaren Bereichs, liegt die Lippe mit der oben beschriebenen, radial nach außen wirkenden Anlagekraft an der Innenwand des abzudichtenden Rohres an.

Je größer die Innenfläche der Dichtlippe und die vom abzusperrenden Medium unmittelbar beaufschlagbare Innenfläche des Mantels ist, desto größer ist die Anpreßkraft der Dichtvorrichtung an die Innenwand des Rohres. Die Dichtlippe soll daher eine möglichst große Axiallänge haben, insbesondere wird vorgeschlagen, die Axiallänge des Mantels einschließlich der Dichtlippe größer, vorzugsweise mehr als doppelt so groß zu wählen, wie der Durchmesser des Mantels bzw. der Dichtlippe.

Weitere Merkmale und Vorteile der Erfindung ergeben sich aus der übrigen Ansprüchen sowie der nun folgenden Beschreibung mehrerer, nicht einschränkend zu verstehender Ausführungsbeispiele, die unter Bezugnahme auf die Zeichnung im folgenden näher erläutert werden. In der Zeichnung zeigen:

Fig. 1    einen Axialschnitt durch ein Teilstück eines abzudichtenden Rohres, in dem sich ein druckgefülltes Abdichtkissen mit nach links, also in der druckzugewandten Richtung vorspringender Dichtlippe befindet,

Fig. 2     eine Darstellung ähnlich Figur 1, jedoch mit einer dichtlippenseitigen Zwischenwand, die sich beim Füllen des Dichtbereichs deformiert und mit einer Schnappfeder versehen ist,

Fig. 3     eine perspektivische Darstellung eines zusammenfaltbaren Rohrdichtkissens im zusammengefalteten Zustand,

Fig. 4     einen Axialschnitt eines vorderen, druckzugewandten Endbereichs eines Rohrdichtkissens mit eine Druckverstärkung aufweisenden Spreizvorrichtung für die Dichtlippe,

Fig. 5     einen Axialschnitt durch eine becherförmige Dichtvorrichtung mit einer Ringkammer als Spreizvorrichtung und

Fig. 6     einen Axialschnitt durch eine becherförmige Dichtvorrichtung mit einer Spiralfeder als Spreizvorrichtung.

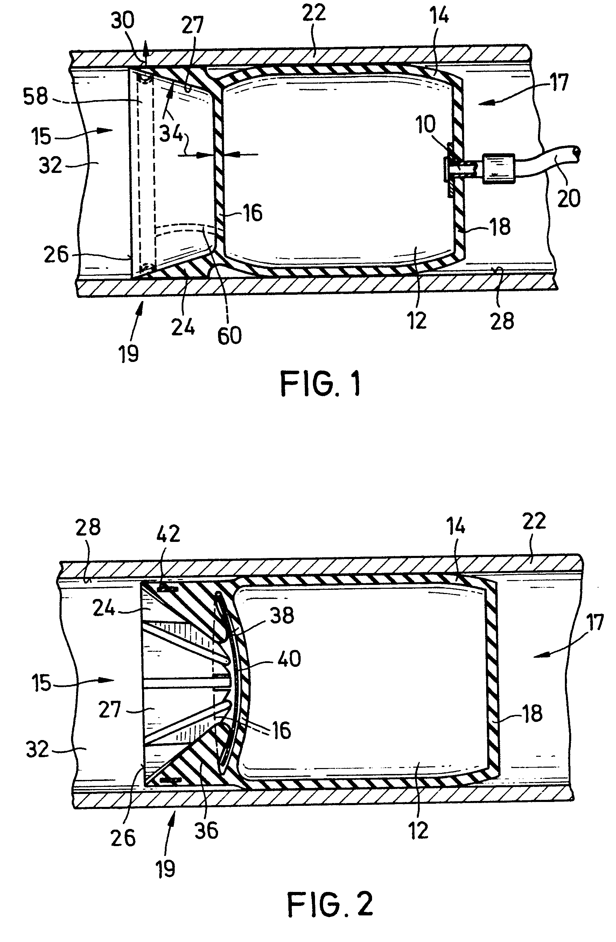

In Figur 1 ist eine Dichtvorrichtung gezeigt, die einen über einen Nippel 10 zugänglichen Innenraum 12 hat, der durch einen zylindrischen Mantel 14, eine linke, druckzugewandte Wand 16 und eine rechte, druckabgewandte Endwand 18 begrenzt wird. Der Nippel 10 befindet sich in der druckabgewandten Endwand 18, an ihn ist ein Druckfüllschlauch 20 angekuppelt. Das bisher beschriebene Rohrdichtkissen entspricht dem Stand der Technik, es beult sich, wie Figur 1 zeigt, im gefüllten, beispielsweise mit Druckluft von 1,5 bar gefüllten Zustand, tonnenförmig aus. Der Außendurchmesser im Bereich der Wände 16, 18 ist geringer als der Innendurchmesser des abzudichtenden Rohres 20, so daß die Dichtvorrichtung im nicht aufgeblasenen (oder nicht mit Flüssigkeit gefüllten) Zustand bequem in das abzudichtende Rohr 22 eingeschoben werden kann.

An der linksseitigen Wand 16, im folgenden Zwischenwand 16 genannt, springt in axialer Verlängerung des Mantels 14 eine umlaufende, ringförmige Dichtlippe 24 vor. Sie hat ein vorderes, druckzugewandtes freies Ende 26, das spitz zuläuft. Es liegt mit Druck an der Innenwand 28 des abzudichtenden Rohres 22 an, dies ist durch den Pfeil 30 symbolisiert. Diese Anlage des freien Endes 26 wird über den gesamten Innenumfang des Rohres 22 aufrechterhalten, so daß gegenüber dem links befindlichen, druckbeaufschlagten Raum 32 eine Abdichtung im Bereich der Dichtlippe 24 erzielt wird.

In diesem Raum 32 befindet sich ein abzusperrendes Medium, das unter einem Druck steht, der der beschriebene, abzudichtende Gegendruck ist. Da dieser Gegendruck bekanntlich in alle Richtungen wirkt, wirkt er auch auf die Innenseite 27 der Dichtlippe 24 und preßt die Dichtlippe 24 gegen die Innenwand 28 des Rohres 22. Hierdurch wird die Abdichtfunktion der Dichtlippe 24 mit steigendem Druck im Raum 32 erhöht. Zugleich wird die Normalkraft bei steigendem Druck vergrößert, mit der die Dichtlippe 24 flächig an der Innenwand 28 anliegt. Ein weiterer Beitrag zur Normalkraft wird durch die Anlage eines Teils des Mantels 14 an die Innenwand 28 erhalten. Die gesamte Normalkraft ist mit der Haftreibungszahl zwischen dem Material der Dichtvorrichtung und der Innenwand 28 zu multiplizieren, sie muß größer sein als die Kraft mit der das abzusperrende Medium aus dem Raum 32 auf die Fläche der Zwischenwand 16 drückt. Dabei kann der Gegendruck im Raum 32 durchaus größer sein als der Innenraum 12.

Der Dichtlippe 24 ist eine Spreizvorrichtung 19 zugeordnet. Sie hat folgende Funktion: Bei nicht betätigter Spreizvorrichtung befindet sich die Dichtlippe in einem radial eingezogenen Zustand und innerhalb eines gedachten Zylinders, dessen Radius kleiner ist als der Innenradius des abzusperrenden Rohres 22. Bei betätigter Spreizvorrichtung 19 wird die Dichtlippe 24 und insbesondere ihr freies Ende 26 radial nach außen gepreßt und liegt umlaufend und flächig an der Innenwand 28 des abzudichtenden Rohres 22 an.

Die im Ausführungsbeispiel nach Figur 1 gezeigte Spreizvorrichtung 19 hat eine an der Innenseite 27 der Dichtlippe 24 angesetzte, ringförmig umlaufende, dichte Ringkammer 58, die mit einem Druckmedium, insbesondere Luft oder Wasser, gefüllt werden kann. Im gezeigten Ausführungsbeispiel ist sie über eine Fülleitung 60 mit dem Innenraum 12 verbunden, die Fülleitung 60 kann aber auch ohne Kommunikation mit diesem Innenraum durch die rechte Endwand 18 hindurchgeführt sein, so daß die Ringkammer 58 separat vom Innenraum 12 gefüllt und entleert werden kann. Die Ringkammer 58 befindet sich möglichst nahe dem freien Ende 26 der Dichtlippe 24. Im gezeigten Ausführungsbeispiel nach Figur 1 wird sie begrenzt durch einen Teil der Innenseite 27 der Dichtlippe 24 und einen im Profil halbkreisförmigen Ring. Andere Ausbildungen, insbesondere als Druckschlauch, ebenso wie andere Formgebungen, sind möglich. Entscheidend ist lediglich, daß sich die Ringkammer 58 beim Füllen radial ausdehnt und die Dichtlippe 24, insbesondere ihr freies Ende 26, an die Innenwand 28 anpreßt. Dadurch wird vermieden, daß eine Keilwirkung am freien Ende 26 bei Gegendruck (Pfeile 34) auftreten kann.

In den Figuren 2 bis 4 sind drei Alternativen für Dichtvorrichtungen mit Innenraum 12 gezeigt, bei denen die Dichtlippe 24 einen eingezogenen Zustand bei nicht gefülltem Innenraum 12 einnimmt, um ein Einschieben der Dichtvorrichtung in das Rohr 22 zu erleichtern. Anschließend, nach Füllen des Innenraums 12, liegt die Dichtlippe 24 kraftschlüssig an der Innwand 28 an.

Im Ausführungsbeispiel nach Figur 2 ist der eingezogene Zustand der Dichtlippe bei nicht gefülltem Innenraum 12 dargestellt. Die druckzugewandte Zwischenwand 16 ist elastisch ausgebildet, sie verformt sich beim Füllen des Innenraums 12 axial in Richtung zur Dichtlippe 24 hin. Im gezeigten Zustand (Figur 2) ist die Zwischenwand 16 nach rechts, also nach innen hin, schalenförmig eingebeult. Im druckgefüllten Zustand des Innenraums 12 wird die Zwischenwand 16 nach außen hin, wie gestrichelt dargestellt ist, ausgeformt. Diese Bewegung wird genutzt, um die Dichtlippe 24 in die in Figur 1 gezeigte Anlagestellung an die Innenwand 28 zu bringen. An der Innenseite 27 der Dichtlippe 24 springen insgesamt acht gleichwinklig verteilte, im wesentlichen dreieckförmige Übertragungsteile 36 radial nach Innen vor, sie sind mit der Dichtlippe 24 verbunden und liegen mit einer unteren, gerundeten Fläche 38 an der Außenseite der Zwischenwand 16 an. Nimmt diese Zwischenwand 16 nun die gestrichelt eingezeichnete, nach links ausgebeulte Form an, so drückt sie auf die Fläche 38 der Übertragungsteile 36, die den axialen Druck in eine radiale Spreizung der Dichtlippe 24 übertragen, wodurch diese die in Figur 1 gezeigte Position annimmt.

In Figur 2 ist zusätzlich eine sternförmige, flache Feder 40 mit acht Armen, die aus einem Federstahlblech gestanzt ist, vorgesehen, sie ist als Schnappfeder ausgebildet, hat also zwei stabile Zustände. Ihre Arme sind jeweils mit den Flächen 38 fest verbunden. Die Dichtlippe ist durch eine Spiralfeder 42 oder eine andere geeignete Maßnahme, beispielsweise durch ihre Formgebung, nach außen hin radial vorgespannt. Der in Figur 2 gezeigte Zustand der Dichtlippe 24 wird nun dadurch erhalten, daß bei nicht gefülltem Kissen eine Kraft von links auf die Zwischenwand 16 ausgeübt wird, ober im Innenraum 12 ein Unterdruck erzeugt wird. Dadurch nehmen die sternförmige Feder 40 und die Zwischenwand 16 die gezeigte, nach innen eingebeulte Form an. Zugleich wird über die Übertragungsteile 36 ein Zug auf die Lippe 24 und gegen die Wirkung der Spiralfeder 42 ausgeübt, wodurch die Dichtlippe 24 etwas nach innen gezogen wird und sich innerhalb eines (gedachten) Zylinders befindet, dessen Durchmesser den Innendurchmesser des Rohres 22 nicht übersteigt und im wesentlichen durch den Durchmesser der Wände 16, 18 bestimmt ist. Die Dichtlippe 24 stört in diesem gezeigten Zustand nicht beim Einschieben oder Herausziehen der Dichtvorrichtung, insbesondere kann ihr freies, spitz zulaufendes Ende 26 nicht beim Einschieben beschädigt werden.

Sobald nun im Innenraum 12 ein Druck erzeugt wird, der die Zwischenwand 16 nach außen in die gestrichelte Position herausdrückt, wird auch die sternförmige Feder 40 in ihre ebenso geformte, andere Schnappstellung gedrückt. Die Lippe 24 wird hierdurch, ähnlich der Ausbildung nach Figur 1, kraftschlüssig an die Innenwand 28 gepreßt. Wenn die Übertragungsteile 38 nicht mit der Zwischenwand 16 verbunden sind, so kann die Lippe nicht durch einen Unterdruck im Innenraum 12 in die eingezogene, in Figur 2 gezeigte Position gebracht werden. Dafür tritt aber folgender Vorteil auf: Wenn die Zwischenwand 16 auf Grund eines hohen Gegendrucks aus der gestrichelten Position nach rechts gedrückt wird, beispielsweise bei Gleichheit des Drucks im Innenraum 12 und des Gegendrucks im Raum 32 einen weitgehend ebenen Verlauf hat, wird hierdurch die Anpreßkraft der Dichtlippe 24, die auf Grund der Federn 40, 42 erreicht wird, nicht beeinflußt. Da das Herausziehen der Dichtvorrichtung aus dem Rohr 22 in Gegenrichtung zur Dichtlippe 24 erfolgt und deshalb eine Beschädigung dieser Dichtlippe 24 beim Herausziehen weniger wahrscheinlich ist, hat auch die beschriebene Alternative viele Vorteile.

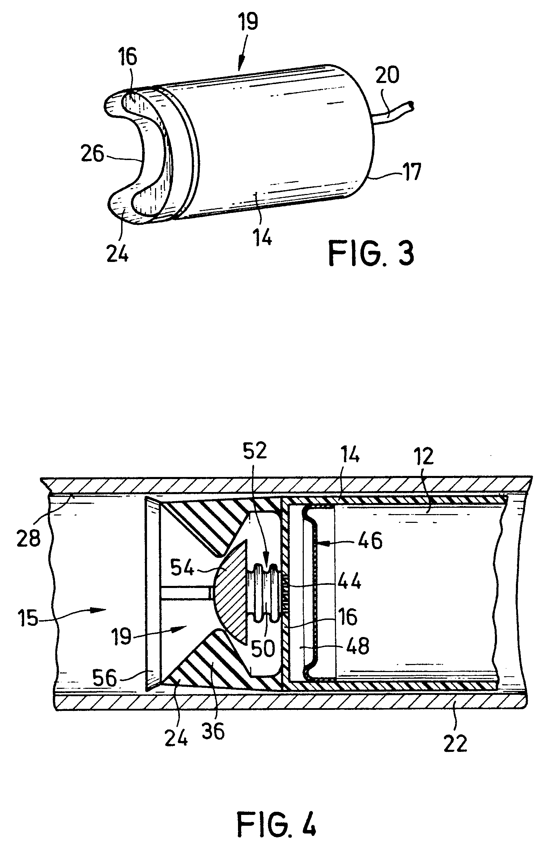

In Figur 3 ist eine Dichtvorrichtung in einem eingefalteten Zustand gezeigt. In diesem Zustand wird sie auf Grund eines Unterdrucks im Innenraum 12 oder (nicht dargestelltes Alternative) auf Grund einer selbsttätig aufreißenden Umschnürung gehalten. Die Dichtvorrichtung gemäß Figur 3 ist grundsätzlich ähnlich aufgebaut wie das Ausführungsbeispiel gemäß Figur 1, lediglich sind insbesondere die Wände 16, 18 so elastisch oder faltbar ausgeführt, daß der dargestellte, etwa mondförmige Faltzustand erreicht wird. Die Dichtlippe 24 hat eine eigene oder eine fremde Vorspannung, wie sie oben anhand der Feder 42 im Ausführungsbeispiel nach Figur 2 beschrieben wurde, und liegt dann, wenn der Innenraum 12 aufgeblasen ist und die Dichtvorrichtung die in Figur 1 gezeigte Form annimmt, mit einer radial wirkenden Anpreßkraft im Sinne des Pfeils 30 (Figur 1) an der Innenwand eines abzudichtenden Rohres 22 an. Das Herausziehen der Dichtvorrichtung gemäß Figur 3 wird erleichtert, wenn in seinem Innenraum 12 ein Unterdruck erzeugt wird. Diese Dichtvorrichtung kann beispielsweise ähnlich aufgebaut sein wie das Rohrdichtkissen nach der US-PS 4,377,184, allerdings mit einer zusätzlichen elastischen, ringförmigen Dichtlippe 24. Neben dem gezeigten, im Profil C-förmigen Faltzustand können auch andere Faltzustände genutzt werden, grundsätzlich ist es auch nicht notwendig, daß der Mantel 14 am gesamten Innenumfang der Innenwand 28 eines Rohres 22 anliegt, da er nur noch der Haftung, nicht aber der Abdichtung dient. Die Abdichtung wird durch die Dichtlippe 24 erreicht. Diese ist bevorzugt aus einem gummielastischen, dehnbaren Material gefertigt, sie läßt sich mithin einfach falten oder deformieren, ohne daß sie, im aufgeblasenen Zustand des Rohrdichtkissens, ihre radial nach außen wirkende Anlagekraft einbüßt.

Im Ausführungsbeispiel nach Figur 4 ist in einer im wesentlichen starren Zwischenwand 16 eine Anzahl von Durchlässen 44 vorgesehen. Rechts von der Zwischenwand 16 befindet sich eine kreisförmige Membran 46 im Innenraum 12, sie dichtet einen rechts von den Durchlässen 44 befindlichen Raum 48 zum Innenraum 12 hin hermetisch ab. Sie ist als Rollmembran ausgeführt. Links von den Durchlässen 44 befindet sich ein ebenfalls abgedichteter Raum 50, der durch einen Faltenbalg 52 und einen kugelkappenförmigen Körper 54 begrenzt ist. In den Räumen 48, 50 befindet sich ein Druckmedium, beispielsweise eine Hydraulikflüssigkeit. Da die Fläche der Membran 46 wesentlich größer ist als die Querschnittsfläche des Faltenbalges 52, wird eine erhebliche Kraftübersetzung erreicht. Dadurch wird einerseits eine ausreichende Anpreßkraft für die Dichtlippe 24 erhalten, andererseits aber wird vermieden, daß bei höherem Gegendruck als dem Fülldruck im Innenraum 12 der Körper 54 nach rechts gedrückt wird.

Im dargestellten, entspannten Zustand ist die Dichtlippe 24 eingezogen. Der Körper 54 befindet sich dadurch in seiner rechten Endstellung. Die Dichtlippe 24 hat zusätzlich einen äußeren, nach außen vorgespannten, freien Rand 56, wie er auch bei den anderen Ausführungsbeispielen vorgesehen werden kann. Er unterstützt die Anlage des freien Endes 26 der Dichtlippe 24 und stellt sicher, daß zwischen zwei Übertragungsteilen 36 und im Bereich geringerer Anpreßdrucke keine Undichtigkeit auftritt.

Sobald der Innenraum 12 gefüllt wird, wird die Membran 46 nach links gepreßt, hierdurch wird Hydraulikflüssigkeit aus dem Raum 48 verdrängt, gelangt in den Raum 50 und drückt den Körper 54 nach links. Dadurch werden die Übertragungsteile 36, die einstückig an der Innenseite 27 der Dichtlippe 24 vorspringen und gleichverteilt angeordnet sind, radial nach außen gedrückt.

Als vorteilhaft hat es sich erwiesen, die im wesentlichen zylindrische Innenseite 27 der Dichtlippe 24 flächenmäßig so groß ausbilden, wie die Fläche der Zwischenwand 16. Hierdurch wird ein großer Beitrag zur Haftfestigkeit in einem abzudichtenden Rohr 22 erhalten. Wesentlich kürzere Lippen 24, die dann aber nur eine Dichtaufgabe haben, sind hierdurch nicht ausgeschlossen, ebenso wesentlich breitere Dichtlippen 24.

Grundsätzlich können die Dichtvorrichtungen auch ringförmig aufgebaut werden, in den inneren Raum derartiger Ringdichtvorrichtungen wird dann eine Dichtvorrichtung nach der Erfindung oder nach dem Stand der Technik eingesetzt.

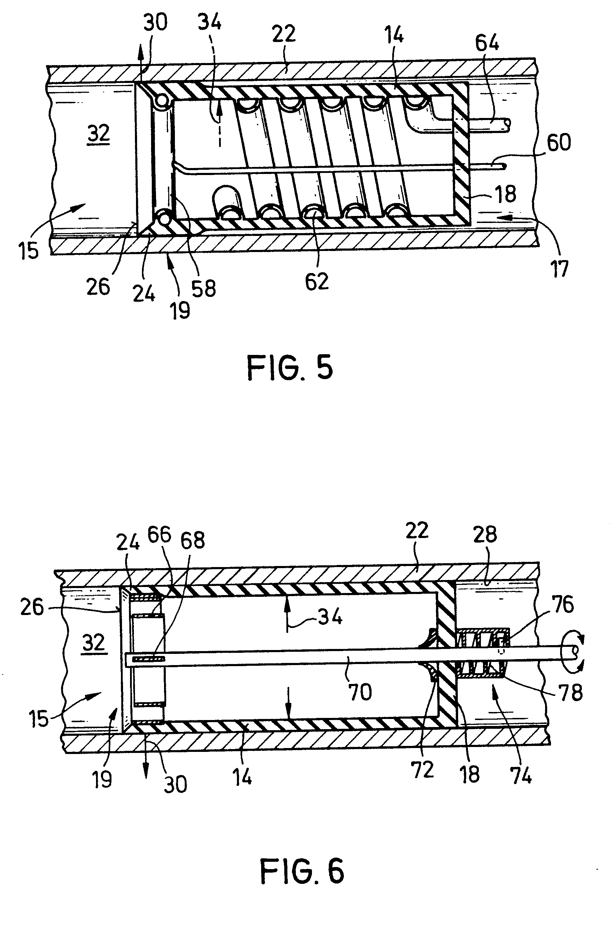

In den Ausführungsbeispielen nach den Figuren 5 und 6 sind Dichtvorrichtungen gezeigt, die keinen Innenraum 12 haben. Das Ausführungsbeispiel nach Figur 5 entspricht im wesentlichen dem Ausführungsbeispiel nach Figur 1, jedoch ist die Zwischenwand 16 nicht vorhanden. Dies hat den Vorteil, daß eine durch den Gegendruck im Raum 32 bewirkte Einbeulung der Zwischenwand 16 sich nicht auf die Anpreßkraft der Dichtlippe 24 negativ auswirken kann, zugleich ist der Anpreßdruck des Mantels 14 vom Gegendruck im Raum 32 abhängig. Im Ausführungsbeispiel nach Figur 1 ist dieser Anpreßdruck des Mantels 14 dagegen konstant, da er lediglich vom Druck im Innenraum 12 abhängt.

Im Ausführungsbeispiel nach Figur 5 ist in unmittelbarer Nähe des freien Endes 26 der Dichtlippe 24 eine Ringkammer 58 ähnlich der Ausführung gemäß Figur 1, hier in Form eines Druckschlauches, vorgesehen. Sie kann über die Fülleitung 60 mit einem Druckmedium gefüllt werden. Die hierdurch gebildete Spreizvorrichtung bewirkt, ebenso wie im Ausführungsbeispiel nach Figur 1, ein Anpressen der Dichtlippe 24 an eine Innenwand 28 eines Rohres 22. Vorteilhaft ist hierbei, daß dieser Innendruck in der Ringkammer 58 durch den Druck des abzusperrenden Mediums nicht verringert, sondern nur erhöht wird. Zusätzlich ist an der Innenwand des Mantels 14 ein auf einer Schraubenlinie angeordneter Druckschlauch 62 vorgesehen, der über eine Fülleitung 64, die ebenfalls durch die Endwand 18 geführt ist, separat von der Ringkammer 58 mit Druck beaufschlagt werden kann. Hierdurch kann eine Fixierung des Mantels 14 an der Innenwand 28 eines Rohres 22 erreicht werden, weiterhin wird der Halt der Dichtvorrichtung im Rohr unterstützt. Entscheidend ist auch hier, daß der Druck im Raum 32, also der Gegendruck, die Anpreßkraft des Mantels 14 an die Innenwand 28 nicht schwächt.

Der Mantel 14 geht einstückig in die Dichtlippe 24 über. Wie auch in den anderen Ausführungsbeispielen sind beide aus einem flüssigkeits- und gasdichten Material gefertigt, das in einem gewissen Maße flexibel ist. Insbesondere hat sich Gummi, vorzugsweise ein durch Stahlcord armiertes Gummiflachmaterial bewährt, das vulkanisiert werden kann.

Im Ausführungsbeispiel nach Figur 6 ist die Spreizvorrichtung 19 mechanisch ausgeführt. Hierzu liegt im Bereich der Dichtlippe 24, die wiederum unmittelbar in den Mantel 14 übergeht, eine Spiralfeder 66 aus flachem, streifenförmigem Federbandstahl an, die außenseitig mit der Lippe 24 verbunden ist und deren innenliegendes Ende 68 sich auf der Achse des Mantels 14 befindet. An dieses Ende 68 ist eine drehbare Stange 70 angesetzt, durch Drehen der Stange in eine Richtung wird die Spiralfeder 66 gespannt, die Dichtlippe 24 und insbesondere ihr freies Ende 26 also nach außen gepreßt, durch Drehen in die andere Richtung wird die Dichtlippe 24 radial nach innen gezogen. Gezeigt ist der betätigte Zustand der Spreizvorrichtung, die Dichtlippe 24 liegt an der Innenwand 28 an.

In der Darstellung gemäß Figur 6 ist im Unterschied zu Figur 5 davon ausgegangen worden, daß im Raum 32 bereits ein ausreichender Gegendruck vorliegt, der Mantel 14 liegt dadurch flächig an der Innenwand 28 an. Dieser Zustand kann im Ausführungsbeispiel nach Figur 5 durch Füllen des Druckschlauchs 62 und/oder durch einen ausreichenden Gegendruck (Pfeil 34) erreicht werden.

Die Stange 70 ist durch die rechte Endwand 18 drehbar, aber abgedichtet hindurchgeführt. Hierzu ist an der druckzugewandten Seite dieser Endwand 18 ein Simmering 72 vorgesehen, wie er aus der Automobiltechnik bekannt ist. Außenseitig ist eine Arretiervorrichtung 74 für zwei Drehzustände der Stange 70 an der Außenseite der Endwand 18 vorgesehen. Durch sie werden die beiden Zustände der Spreizvorrichtung 19, nämlich entspannter Zustand und betätigter Zustand mechanisch gehalten, und zwar gegen die jeweils rückstellende Kraft der Spiralfeder 66. Im gezeigten Ausführungsbeispiel ist die Arretiervorrichtung 74 durch eine radial an der Stange 70 vorspringenden Bolzen 76 und eine schraubenlinienförmig (wendelförmig) verlaufende Fläche 78 gebildet. Letztere hat zwei Einrastbuchten, in die der Bolzen 76 durch die Spiralfeder 66 hineingezogen wird und die den erreichten Verdrehungszustand der Stange 70 sichern. Andere Ausbildungen der Arretiervorrichtungen 74 sind möglich.

Anstelle der lediglich als Beispiel gezeigten Spreizvorrichtungen 19 können beliebige andere Spreizvorrichtungen an der Innenseite 27 der Dichtlippe 24 angeordnet sein oder sich in der Dichtlippe 24 selbst befinden. So kann beispielsweise im Ausführungsbeispiel nach Figur 2 der Spreizdruck durch eine hydraulische Zylinder/Kolbeneinheit aufgebracht werden, die auf die Flächen 38 wirkt und axial ausgerichtet ist. In diesem Fall kann die Zwischenwand 16 entfallen. Ebenso kann im Ausführungsbeispiel nach Figur 4 der Raum 50 nach rechts abgeschlossen sein, indem keine Durchlässe 44 vorhanden sind. Der Raum 50 wird über eine Druckleitung angeschlossen und kann durch diese gefüllt oder entleert werden. Die Spreizvorrichtung 19 kann auch rein mechanisch wirken, beispielsweise über einen Bowdenzug, wie er für Zweiradfahrzeuge bekannt ist.

In den Figuren ist der druckzugewandte Endbereich des Mantels 14 mit der Bezugsziffer 15, der druckabgewandte Endbereich mit der Bezugsziffer 17 bezeichnet.

Anmelder:     Herr Manfred VETTER in 5352 Zülpich

Bezeichnung: Dichtvorrichtung für ein Rohr mit einem
              zylindrischen, an eine Innenwand des Rohres
              flächig anlegbaren Mantel und einer Endwand.


A n s p r ü c h e


1.    Dichtvorrichtung für ein Rohr (22) mit einem zylindrischen, an eine Innenwand (28) des Rohres (22)
      flächig anlegbaren Mantel (14) aus nachgiebigem,
      flüssigkeits- und gasdichtem Material, der einen
      druckzugewandten Endbereich (15) und einen druckabgewandten Endbereich (17) aufweist und mit einer kreisförmigen Endwand (18) aus flüssigkeits- und gasdichtem Material, die den Mantel (14) am druckabgewandten
      Endbereich (17) dicht abschließt,
      d a d u r c h   g e k e n n z e i c h n e t, daß am
      druckzugewandten Endbereich (15) des Mantels (14)
      eine umlaufende Dichtlippe (24) aus einem flexiblen,
      flüssigkeits- und gasdichten Material ausgebildet
      ist, die ein freies Ende (26) aufweist, und daß eine
      rückstellbare Spreizvorrichtung (19) zur Anpressung
      der Dichtlippe (24) einschließlich ihres freien Endes
      (26) auf einer geschlossenen Ringfläche und an die
      Innenwand (28) des Rohres (22) vorgesehen ist.


2.    Dichtvorrichtung nach Anspruch 1, dadurch gekennzeichnet, daß zwischen der Dichtlippe (24) und dem
      druckabgewandten Endbereich (17) eine flüssigkeits-
      und gasdichte, kreisförmige Zwischenwand (16) vorgesehen ist und daß diese Wand (16) zusammen mit dem Mantel (14) und der Endwand (18) einen dichten, füllbaren Innenraum (12) ausbildet, der über ein Anschlußstück (10), das sich vorzugsweise in der Endwand (18) befindet, zugänglich ist.

3. Dichtvorrichtung nach Anspruch 1 oder 2, dadurch gekennzeichnet, daß die Dichtlippe (24) an ihrem freien Ende (26) spitz ausläuft, insbesondere an ihrer Außenseite zylindrisch und an ihrer Innenseite (27) konisch verläuft.

4. Dichtvorrichtung nach einem der Ansprüche 1 bis 3, dadurch gekennzeichnet, daß die Dichtlippe (24) aus einem gummielastischen, dehnbaren Material gefertigt ist und vorzugsweise ein vorspannendes Mittel, beispielsweise eine Spiralfeder (42), aufweist.

5. Dichtvorrichtung nach einem der Ansprüche 1 bis 4, dadurch gekennzeichnet, daß die Dichtlippe (24) bei nichtbetätigter Spreizvorrichtung (19) selbsttätig eine entspannte Stellung mit einem kleinen Außendurchmesser annimmt, insbesondere daß der Dichtlippe (24) oder der Spreizvorrichtung (19) eine Rückstellfeder zugeordnet ist.

6. Dichtvorrichtung nach einem der Ansprüche 1 bis 5, dadurch gekennzeichnet, daß als Spreizvorrichtung (19) an der Innenseite (27) der Dichtlippe (24) oder innerhalb der Dichtlippe (24) eine ringförmig umlaufende, dichte Ringkammer (58), insbesondere ein Druckschlauch, angeordnet ist, der über eine Zuleitung (60) mit einem Druckmedium, insbesondere Luft oder Wasser, füllbar ist.

7. Dichtvorrichtung nach einem der Ansprüche 1 bis 6, dadurch gekennzeichnet, daß die Spreizvorrichtung (19) eine Spiralfeder (66) und eine drehbare Betätigungsvorrichtung (Stange 70 mit Arretiervorrichtung 74) aufweist.

8. Dichtvorrichtung nach einem der Ansprüche 1 bis 7, dadurch gekennzeichnet, daß die Spreizvorrichtung (19) Übertragungsteile (36) aufweist, die vorzugsweise zwischen der Zwischenwand (16) und der Innenseite (27) der Dichtlippe (24) angeordnet sind.

9. Dichtvorrichtung nach einem der Ansprüche 1 bis 8, dadurch gekennzeichnet, daß die Axiallänge des Mantels (15) einschließlich der Dichtlippe (24) größer, vorzugsweise mehr als doppelt so groß ist wie der Durchmesser des Mantels (14) bzw. der Dichtlippe (24).

10. Dichtvorrichtung nach einem der Ansprüche 1 bis 9, dadurch gekennzeichnet, daß die beiden Wände (16, 18), die Dichtlippe (24) und zumindest ein Teil des Mantels (14) im nicht gefüllten Zustand des Innenraums (12) faltbar, insbesondere durch eine Verringerung des Innendrucks im Innenraum (12) selbsttätig einfaltbar sind.

FIG. 1

FIG. 2

FIG. 3

FIG. 4

0161570

FIG. 5

FIG. 6